Europäisches Patentamt

European Patent Office    (11) Publication number:    **0 194 767**

Office européen des brevets    **A2**

## EUROPEAN PATENT APPLICATION

(21) Application number: **86301147.4**

(22) Date of filing: **19.02.86**

(51) Int. Cl.⁴: **B 60 B 21/10**
**B 60 C 17/04**

(30) Priority: **09.03.85 GB 8506181**

(43) Date of publication of application:
**17.09.86 Bulletin 86/38**

(84) Designated Contracting States:
**BE DE FR GB IT SE**

(71) Applicant: **SP TYRES UK LIMITED**
**Fort Dunlop**
**Erdington Birmingham B24 9QT(GB)**

(72) Inventor: **Udall, William Stanley**
**6 Silver Birch Road Streetly**
**Sutton Coldfield West Midlands(GB)**

(72) Inventor: **Holmes, Thomas**
**16 Rosslyn Road**
**Sutton Coldfield West Midlands(GB)**

(74) Representative: **Stewart, Charles Geoffrey**
**SP TYRES UK LIMITED Tyre Technical Division**
**Fort Dunlop Birmingham B24 9QT(GB)**

(54) Vehicle wheel.

(57) A vehicle wheel adapted to provide support for a deflated or punctured tyre and allow safe continued use of the assembly.

The wheel rim comprises a rigid one piece assembly so that misassembly is avoided and comprises a pair of axially spaced-apart bead seats (1) and (2) each with tyre retaining flanges (3) and immediately inwards of each bead seat (1) and (2) a tyre bead retaining formation. Two tyre fitting wells (7) and (8) are provided with a side of a central rigid circumferentially extending support member (10) which projects radially outwards to contact the inside of the tread of a deflated tyre and provide support.

The bead retaining formation is preferably a groove of the type known as TD.

Fig.1.

0194767

## VEHICLE WHEEL

This invention relates to a vehicle wheel and in particular to a wheel for a tubeless pneumatic tyre.

Loss of air pressure from tyre and wheel assemblies is well acknowledged to be dangerous and many attempts have been made to obviate the danger following air loss and to provide for continued use of the tyre and wheel assembly for a small mileage to allow the vehicle to reach a place of safety or indeed to complete its journey. Many complex multicomponent internal support devices have been proposed which are assembled together when the tyre and wheel are assembled and these devices provide an internal support to prevent excessive deflection of the tyre by means of supporting the inside of the tread region even when all air pressure is lost. Such assemblies are also heavy and do not provide a stable running tyre and wheel assembly due to bead movement. More importantly, however, they are subject to incomplete or mis-assembly.

One object of the present invention is to provide a novel one piece wheel rim which provides stable, reliable emergency runflat performance.

According to one aspect of the present invention a vehicle wheel rim comprises in a single rigid assembly a pair of parallel, circumferentially extending, axially spaced-apart, radially outwardly facing bead seats, adjacent to and axially outwardly of each bead seat a radially outwardly projecting tyre retaining flange, a tyre bead retaining formation adjacent each bead seat, two tyre fitting wells between the bead seats separated by a rigid circumferentially extending support member extending radially outwardly of the assembly to provide a support surface radially outwardly of the bead seats such that a deflated tyre is supported upon the support surface and the beads are retained at their seats.

The tyre bead retaining formation preferably comprises a circumferentially extending bead toe engaging groove adjacent to and immediately axially inwards of each bead seat, shaped and positioned so as to locate the toe of the TD type of tyre known in the art and described in UK Patent Specification No 1 584 553.

It is an important feature of the invention that all the features of the wheel are a one piece assembly as it is thus impossible for a tyre to be fitted to the wheel rim with the omission of an essential component such as for example the interal support device or the bead retaining device. It is also important that the bead seats, in facing outwardly, are conventional bead seats suitable for tyres of proven construction and indeed for tyres which are already commercially available.

The support member preferably comprises a substantially straight radially extending flange and a support ring substantially wider than the flange thickness having a substantially cylindrical surface to contact the inner region of the tread of a deflated tyre. The cylindrical surface may be straight or curved in cross section. Preferably the cylindrical surface has a width only slightly less than the width between the bead seats so that a large support area is provided under the tread.

Lubricant container means may be formed in the support member or attached thereto to release lubricant when contacted by a deflated tyre to act in the conventional manner to extend runflat mileage.

Whilst it is important that the wheel rim is a one piece assembly in practice it may be a single cost component or an assembly of components fastened together for example by welding or bolting. The important feature is, however, that the components, once assembled together remain together throughout the life of the wheel rim.

Further aspects of the present invention, will be apparent from the following description, by way of example only, of one embodiment in conjunction with the attached diagrammatic drawings in which

Fig 1   is a cross section of one part of a one piece wheel rim, and

Fig 2   is a part cross section showing the wheel rim of Fig 1 with a tyre assembled thereon.

The wheel rim comprises a pair of conventional circumferentially extending bead seats 1 and 2, each of which is tapered at an angle of $5^{\circ}$ to the axial centre of the wheel rim to provide seats for tyre beads.  The bead seats 1 and 2 each terminate in a radially outwardly directed tyre retaining flange 3.

Adjacent each bead seat 1 and 2 and axially inwards thereof is a tyre toe retaining groove 4 and then a short straight connecting region or ledge region 5.  The central region of the wheel rim is formed into a tyre bead fitting well 6 which is subdivided into a pair of fitting wells 7 and 8 one either side of a radially outwardly extending flange 9.  The flange 9 extends circumferentially around the wheel rim and provides a support for a support member 10 which comprises a cylindrical steel member 10 having a slightly domed or radiused upper surface 11 which provides a support surface 11 for a tyre in use.  The width of the support surface 11 is the same as the distance between the bead seats 1 and 2.

The wheel rim may be a rolled steel rim of basically conventional type with the steel support 9 and steel member 10 welded to it to form the completed wheel.

The height of the support surface 11 from the bead seats 1 and 2 measured radially of the wheel is substantially higher than the heights of the flanges 3 to provide support for a tyre but is sufficiently low and narrow to allow assembly.

The assembly and use of the wheel rim is as follows:-

Assembly

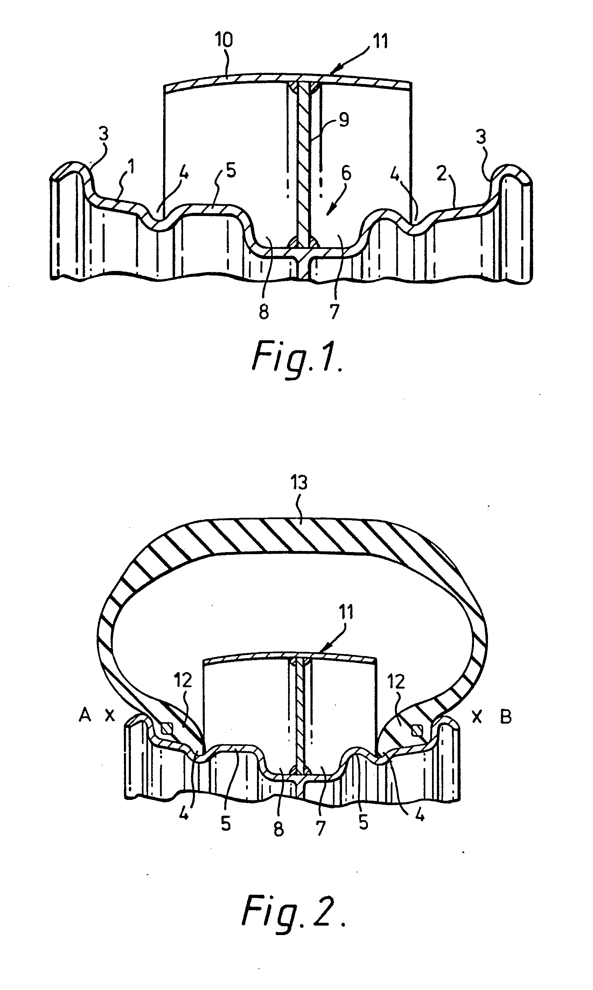

The wheel rim described is for use with a TD tyre and assembly to the one piece wheel rim is carried out by positioning the wheel rim at $90^o$ to the tyre and thrusting it into the tyre. The tyre beads take up an elliptical shape momentarily to allow the height of the support surface 1 into the interior of the tyre and then when the wheel rim is rotated so that both tyre and wheel rim having the same axis one bead is either side of the flanges 3. (See positions A and B in Fig 2.)

The tyre then has its two beads 12 fitted to their respective bead seats 1 and 2 by the usual means of pushing one side of the bead into its fitting well 7 or 8 to allow the diametrially opposed position to be lifted over its flange 3.

In use of the vehicle the support remains within the assembly without contacting the tyre. In the event of loss of air, however, the support contacts and supports the tread regions 13 of the tyre and the bead retainers keep the beads at their seats. The resultant assembly is stable, does not suffer from tyre movement to the side of the support and provides effective runflat performance.

Most importantly, as long as the tyre is visibly seated with its beads inside the flanges it cannot be either incorrectly assembled or have any essential component of conventional support devices omitted.

Finally the support surface may include pockets, either permanently open pockets or pockets temporarily sealed by a frangible membrane enclosing lubricant to improve still further the runflat mileage in the conventional way.

## CLAIMS

1  A vehicle wheel rim comprising in a single rigid assembly a pair of parallel, circumferentially extending, axially spaced-apart, radially outwardly facing bead seats (1)and (2) adjacent to and axially outwards of each bead seat (1)and(2)a radially outwardly projecting tyre retaining flange (3)characterised by in combination a tyre bead retaining formation adjacent each bead seat, two tyre fitting wells (7)and(8)between the bead seats(1)and(2) separated by a rigid circumferentially extending support member (10)extending radially outwardly of the assembly to provide a support surface(11)radially outwardly of the bead seats(1)and(2) such that a deflated tyre is supportable upon the support surface and the beads are retained at their seats.

2  A vehicle wheel rim according to claim(1)characterised in that the tyre bead retaining formation comprises a circumferentially extending bead toe engaging groove(4)adjacent to and immediately axially inwards of each bead seat (1)and(2).

3  A vehicle wheel rim according to claim(1) or (2)characterised in that the tread support member(10)comprises a substantially straight radially extending flange (4)and a support ring(10), substantially wider than the flange thickness mounted on the flange(9)and having a substantially cylindrical surface(11) to contact the tread of a deflated tyre.

4  A vehicle wheel rim according to claim(3)characterised in that the cylindrical support surface (11)is curved in cross section.

5  A vehicle wheel rim according to claims(3)or(4)characterised in that the cylindrical support surface (11)is curved in cross section.

- 6 -                                 0194767

6   A vehicle wheel rim according to claims(3),(4)or(5)characterised
    in that the cylindrical support surface(11)includes lubricant
    retaining pockets.

1/1

0194767

Fig.1.

Fig.2.